# EUROPÄISCHE PATENTSCHRIFT

(11) **EP 1 475 409 B1**
(45) Veröffentlichungstag und Bekanntmachung des Hinweises auf die Patenterteilung: **30.09.2009**
(21) Anmeldenummer: 04019212.2
(22) Anmeldetag: 03.02.2000
(51) Int. Cl.: C08L 21/00, C08L 101/00, C08L 91/00, C08L 23/08, C08K 3/04, C08K 5/00

(54) **Verfahren zur Herstellung eines thermoplastischen Vulkanisats**
Process for the preparation of a thermoplastic vulcanisate
Méthode de préparation d'un vulcanisat thermoplastique

(30) Priorität: 15.02.1999 DE 19906002
(43) Veröffentlichungstag der Anmeldung: 10.11.2004
(62) Teilanmeldung aus: 00912348.0
(73) Patentinhaber: PolyOne Corporation, Avon Lake OH 44012-2343 (US)
(72) Erfinder: Vortkort, Jörg, 21441 Garstedt (DE); Gräbner, Friedrich Wilhelm, 21435 Stelle (DE); Bontemps, André, 21079 Hamburg (DE); Volkmann, Stefan, 99880 Langenhain (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 769 361
- GB-A- 2 162 526
- US-A- 4 594 390

## Beschreibung

Die Erfindung betrifft ein thermoplastisches Vulkanisat.

Thermoplastische Vulkanisate sind ein Blend, bestehend aus einem thermoplastischen Kunststoff und einem vernetzten Elastomeren. Die Vernetzung des Elastomeren geschieht durch dynamische Vulkanisation. Unter dem Begriff dynamische Vulkanisation versteht man ein Verfahren, bei dem der thermoplastische Kunststoff, der Kautschuk und das Vernetzungssystem mastifiziert werden, während der Kautschuk vernetzt. Beispiele für dynamisch vernetzte thermoplastische Elastomere und das Verfahren der dynamischen Vulkanisation sind in den Patenten US-A-4 130 535 und US-A-4 311 628 beschrieben. In der Offenlegungsschrift DE-A-26 32 654 ist ein Blend aus einem thermoplastischen Polyolefin, einem EPDM-Kautschuk und einem beliebigen aus US-A-3 806 558 bekannten Vernetzungssystem beschrieben. Der Kautschuk ist bis zu einem solchen Ausmaß vulkanisiert, daß er nicht mehr als etwa drei Prozent in Cyclohexan bei 23°C extrahierbaren Kautschuk enthält. Die GB-A-2 007 683 beschreibt ein thermoplastisches Elastomer, beinhaltend ein thermoplastisches kristallines Polyolefinharz und vulkanisiertes EPDM. Die Vernetzung des Kautschuks erfolgt mit einem Phenolharz. Der erzielte Vernetzungsgrad ist größer als 97 %. In WO-A-98/58020 wird ferner ein TPE-Blend auf Basis eines thermoplastischen Olefins, eines EPDM-Kautschuks und eines Ethylen-Octen Copolymeren (EOC) beschrieben. Die in dieser Druckschrift vorgestellten thermoplastischen Vulkanisate werden ohne weichmachende Öle hergestellt. Desweiteren wird ein neuartiges Vernetzungssystem eingesetzt. Das Vernetzungssystem besteht aus einem Phenolharz und einem Oxid auf Basis Mg, Pb oder Zn. Dieses System führt dabei zu einem teilweisen Vernetzen des EOC. Nachteilig an dem beschriebenen TPE ist die rezepturbedingte hohe Ölquellung. Desweiteren wird durch ein teilweises Vernetzen des EOC die Fließfähigkeit verschlechtert. Aufgrund des hohen Polymergehaltes ist zudem mit erhöhten Rohstoffkosten zu rechnen.

In der EP-B-0 107 635 wird darauf verwiesen, daß die bis dahin üblichen Mischverfahren zur Herstellung der dynamisch vulkanisierten thermoplastischen Elastomere nicht dazu geeignet sind, weiche Mischungen mit guter Extrudierbarkeit herzustellen. Es wird ein Einstufenverfahren im gleichsinnig drehenden Doppelschneckenextruder beschrieben, welches bei hohen Schergeschwindigkeiten > 2000s-1 und einer Verweilzeit < 2 min die Fertigung gut extrudierbarer weicher thermoplastischer Elastomere ermöglicht.

Die Entwicklung und Produktion von kostengünstigen weichen thermoplastischen Vulkanisaten ist für das weitere Vordringen der TPE in Anwendungsgebiet der klassischen Elastomere besonders wichtig. Unter weichen thermoplastischen Vulkanisaten sollen im folgenden Materialien mit einer Härte kleiner 70 Shore A (dieser Wert bezieht sich auf Messungen an extrudierten Flachprofilen) verstanden werden. Da die Ölaufnahme der Kautschukphase begrenzt ist, lassen sich durch die Zugabe von Weichmacherölen minimal Härten von ca. 50 Shore A bei thermoplastischen Vulkanisaten auf Basis EPDM/PP erreichen (EP-A-0 757 077). Bereits in diesem Härtebereich führt der zunehmende Ölanteil zu einem Abfall der mechanischen Eigenschaften und zu erhöhten Fogging-Werten. Auch ein Ausschwitzen des Öles an die Formteiloberfläche ist möglich. Folgende Daten sollen hier beispielhaft erwähnt werden. Bezogen auf 100 Teile Kautschuk enthält ein thermoplastisches Vulkanisat mit einer Härte von 50 Shore A ca. 150 bis 200 Teile Öl. Um den verfahrenstechnischen Aufwand beim Einmischen des Weichmacheröles in einem wirtschaftlich vertretbaren Rahmen zu halten, werden bevorzugt ölverstreckte EPDM-Kautschuke eingesetzt. Ein Nachteil ist aber auch hierbei, daß die ölverstreckten EPDM-Typen im Verhältnis zu den unverstreckten EPDM-Typen teurer sind. Die am Markt erhältlichen mit 75 bzw. 100 Teilen ölverstreckten EPDM-Typen enthalten zudem aromatenhaltige Weichmacheröle, so daß bei Bewitterung eine Verfärbung eintritt. Besonders problematisch ist daher die Herstellung von hellen, weichen thermoplastischen Vulkanisaten. Bei den am Markt vorhandenen dynamischen Vulkanisaten auf Basis EPDM/PP kann die Verfärbung nur durch einen entsprechend großen rohstoffseitigen Aufwand begrenzt, aber nicht komplett unterbunden werden.

Die Zugabe von Styrolblockcopolymeren, die ebenfalls zu einer Reduzierung der Härte führt, ist teuer und reduziert zudem die Bewitterungsstabilität.

In der nachfolgend aufgeführten Patentliteratur werden Rezepturen und Verfahrensvarianten vorgestellt, die die Fertigung von thermoplastischen Vulkanisaten erlauben. In der EP-A-0 757 077 ist ein sehr weiches thermoplastisches Vulkanisat (< 60 Shore A, bevorzugt < 45 Shore A) beschrieben. Dieses Vulkanisat besteht aus zwei vulkanisierten Kautschuken EPDM und BR bzw. SBR bzw. CR und einer größeren Menge Prozeßöl. Die vulkanisierten Kautschuke liegen als fein verteilte disperse Phase in der Thermoplastmatrix vor. In WO-A-97/39059 wird ein weiches thermoplastisches Vulkanisat mit teilvernetzer Kautschukphase vorgestellt, welches bevorzugt aus einem thermoplastischen Polyethylen oder Polypropylen (Homo- bzw. Copolymer), einem amorphen Polypropylen und einem EPDM bzw. BR-Kautschuk besteht. Die Zugabe des amorphen Polypropylen findet bevorzugt erst nach der dynamischen Vulkanisation des Kautschuks statt.

Da die bisher bekannten thermoplastischen Vulkanisate mit den Nachteilen eines höheren verfahrenstechnischen Aufwandes und/oder hohen Kosten verbunden sind, liegt nun der Erfindung die Aufgabe zugrunde, ein kostengünstigeres, weiches thermoplastisches Vulkanisat zu entwickeln, welches eine geringere Verfärbungsneigung bei Bewitterung aufweist.

Gelöst wird diese Aufgabe gemäß Patentanspruch 1 durch ein thermoplastisches Vulkanisat mit einer Zusammensetzung gemäß Patentanspruch 1, wobei in den Patentansprüchen 2 bis 9 zweckmäßige Werkstoffparameter genannt sind.

Darüber hinaus besteht die Aufgabe der Erfindung darin, das erfindungsgemäße thermoplastische Vulkanisat ohne erhöhten verfahrenstechnischen Aufwand herzustellen.

In diesem Zusammenhang beinhalten die Patentansprüche 10 bis 20 zweckmäßige Verfahrensschritte.

Das Verfahren zum Herstellen eines thermoplastischen Vulkanisats wird nun im folgenden näher beschreiben.

Verfahren zum Herstellen eines thermoplastischen Vulkanisats, umfassend:
(a) Einspeisen von unvulkanisiertem Kautschuk und üblichen Mischungsingredienzien ohne Vernetzer oder Vernetzungssystem in einen Extruder;
(b) Aufschmelzen des unvulkanisierten Kautschuks und Dispergieren der üblichen Mischungsingredienzien in dem aufgeschmolzenen unvulkanisierten Kautschuk;
(c) Zugabe eines Weichmachers zu dem aufgeschmolzenen unvulkanisierten Kautschuk im ersten Drittel des Extruders;
(d) Zugabe eines thermoplastischen Kunststoffs und einen unvernetzten Polyethylen zu dem aufgeschmolzenen unvulkanisierten Kautschuk; und
(e) Zugabe des Vernetzers bzw. des Vernetzungssystems zur dynamischen Vulkanisation des unvulkanisierten Kautschuks.

### Thermoplastischer Kunststoff (A)

Verwendet werden können hier beliebige thermoplastische Kunststoffe, beispielsweise Polystyrol, Polyamid, Polyester oder Polypropylen, u.a. in Form von Kunststoffgemischen. Der bevorzugt eingesetzte Kunststoff ist ein Polypropylen auf der Basis eines Homopolymeren, Blockpolymeren oder Copolymeren, vorzugsweise wiederum in Verbindung mit einer hohen Kristallinität.

Der Anteil des thermoplastischen Kunststoffes beträgt 5 bis 20 Gew.-%, und zwar bezogen auf die Summe der vier Komponenten (A, B, C, D).

### Unvernetztes Polyethylen (B)

Das im wesentlichen unvernetzte Polyethylen ist vorzugsweise ein VLDPE (Very Low Densitiy Polyethylen) mit einer Dichte von 0,88 bis 0,91 g/cm³ bei 20°C und/oder ein ULDPE (Ultra Low Density Polyethylen) mit einer Dichte von 0,85 bis 0,88 g/cm³ bei 20°C.

Der Anteil des unvernetzten Polyethylens beträgt zweckmäßigerweise 5 bis 25 Gew.-% bzw. 5 bis 15 Gew.-%, und zwar ebenfalls bezogen auf die Summe der vier Komponenten (A, B, C, D).

### Vulkanisierter Kautschuk (C)

Eingesetzt werden können verschiedene Kautschuktypen, beispielsweise auf Basis Naturkautschuk (NR), Butylkautschuk (BR), Styrol-Butadien-Kautschuk (SBR), Nitrilkautschuk (NBR) oder eines Etyhlen-Propoylen-Dien-Mischpolymerisates (EPDM), wobei auf die Verträglichkeit mit dem thermoplastischen Kunststoff (A) zu achten ist, insbesondere in bezug auf die Phaseninversion.

Der eingesetzte Kautschuk ist bevorzugt ein EPDM-Kautschuk. Der dritte Monomer kann Hexadien-1,4, Dicylopentadien oder insbesondere Ethyliden-Norbonen sein.

Der mindestens teilvulkanisierte Kautschuk (C) weist zweckmäßigerweise einen Verneztungsgrad > 90 %, insbesondere > 95 %, auf. Eine Methode zur Bestimmung des Vernetzungsgrades wird in dem Patent US-A-4 311 628 beschrieben.

Der bevorzugte Mengenanteil des Kautschuks beträgt 30 bis 50 Gew.-%, und zwar ebenfalls bezogen auf die Summe der vier Komponenten (A, B, C, D).

### Weichmacher (D)

Zum Verstrecken des Kautschuks kann jeder geeignete Weichmacher eingesetzt werden. Zum Verstrecken des EPDM-Kautschuks werden insbesondere paraffinische oder naphthalische Öle verwendet. In diesem Zusammenhang ist das Weichmacheröl zweckmäßigerweise ein paraffinisches Öl mit einem Aromatenanteil < 4 Gew.-%, und zwar bezogen auf die Gesamtmasse des Weichmachers. Insbesondere wird jedoch ein aromatenfreies paraffinisches Weichmacheröl verwendet.

Der Mengenanteil an Weichmacher beträgt bevorzugt 25 bis 40 Gew.-% bzw. 25 bis 50 Gew.-%, und zwar wiederum bezogen auf die Summe der vier Komponenten (A, B, C, D).

### Mischungsingredienzien (E)

Ein wesentlicher Bestandteil ist der Vernetzer bzw. das Vernetzungssystem, das zusätzlich Vernetzungshilfsmittel (z.B. Beschleuniger) beinhaltet. Vorzugsweise wird ein Vernetzer bzw. ein Vernetzungssystem auf Basis eines Phenolharzes verwendet, insbesondere in Verbindung mit einem Beschleuniger aus Zinndichlorid. Damit wird einerseits ein hoher Vernetzungsgrad des Kautschuks (C) erreicht und andererseits eine Vernetzung des Polyethylens (B) verhindert.

Zumeist enthalten die Mischungsingredienzien ferner einen Füllstoff sowie Additive, wobei bezüglich der Additive beispielsweise Alterungsschutzmittel, UV-Stabilisatoren, UV-Absorber, Farbpigmente, Flammschutzmittel, Fließmittel und/oder Prozeßhilfsmittel zu nennen sind.

Die Mischungsingredienzien sind zweckmäßigerweise in der 0,02 bis 0,5-fachen Gewichtsmenge beigefügt, und zwar bezogen auf die Summe der vier Komponenten (A, B, C, D).

Im folgenden werden nun die bevorzugten Verfahrensschritte zur Herstellung des erfindungsgemäßen thermoplastischen Vulkanisates beschrieben,
- Zunächst werden der noch unvulkanisierte Kautschuk (C) und die Mischungsingredienzien (E) ohne Vernetzer bzw. Vernetzungssystem in einen kontinuierlich arbeitenden Walzen- oder Schneckenextruder eingegeben. Der unvernetzte Kautschuk liegt dabei in einem rieselfähigen Zustand vor, vorzugsweise in Form eines rieselfähigen Pellets oder Granulates.
- Nun werden der unvulkanisierte Kautschuk (C) sowie die Mischungsingredienzien (E) aufgeschmolzen und dispergiert.
- Anschließend erfolgt die Zugabe des Weichmachers (D) unter Einmischung in die beiden vorgegebenen Bestandteile (C, E).
- Der Weichmacher (D) und die Mischungsingredienzien (E) werden dabei im ersten Drittel des Walzen- oder Schneckenextruders in den unvulkanisierten Kautschuk (C) eingemischt.
- Nun erfolgt die Zugabe des Gemisches aus dem thermoplastischen Kunststoff (A) und dem unvernetzten Polyethylen (B), wobei die Zugabe dieses Gemisches insbesondere nach dem ersten Drittel des Walzen- oder Schneckenextruders erfolgt. Dabei tritt ein Aufschmelzen und Dispergieren der Komponenten (A, B) unter Homogenisierung der Schmelze ein.
- Anschließend wird der Vernetzer bzw. das Vernetzungssystem zugegeben, wobei die dynamische Vulkanisation des Kautschuks (C) unter hohen Scher- und Dehngeschwindigkeiten, die mindestens 100 s⁻¹, insbesondere 500 bis 1500 s⁻¹, betragen, erfolgt. Ferner ist mit diesem Verfahrensschritt ein Entgasen der dynamisch vulkanisierten Kunststoffschmelze, insbesondere unter Vakuum, und der anschließende Druckaufbau zum Ausformen des thermoplastischen Vulkanisates verbunden. Der gesamte hier geschilderte Verfahrensschritt erfolgt bevorzugt in der zweiten Hälfte des Walzen- oder Schneckenextruders.
- Abschließend wird üblicherweise das ausgeformte thermoplastische Vulkanisat nach dem Abkühlen granuliert.

Die Mischungserstellung der vier Komponenten (A, B, C, D) und der gesamten Mischungsingredienzien (E) erfolgt im Einstufenprozeß.

Anhand von experimentellen Daten wird nachfolgend das erfindungsgmäße thermoplastische Vulkanisat und das Verfahren beispielsweise beschrieben.

Als Versuchslinie wurde ein Berstorff Doppelschneckenextruder ZE 25 mit einer Länge von 54 D und gleichsinnig drehenden Schnecken eingesetzt. Die maximal mögliche Schneckendrehzahl beträgt 500 min⁻¹. Die EPDM-Pellets (A) und die übrigen Mischungsingredienzien (E) einschließlich Zinndichlorid als Beschleuniger, jedoch ohne Vernetzer, werden in die Einzugsöffnung des Extruders dosiert. Nach dem Aufschmelzen der Kautschukphase wird der Weichmacher (D) eingespritzt und im ersten Drittel des Extruders eingemischt. Weiter stromabwärts wird das Gemisch aus Polypropylen (A) und Polyethylen (B) zugeführt. Nach dem Aufschmelzen und Homogenisieren der Kunststoffschmelze wird das Phenolharz zugegeben. Im Rahmen einer verfahrenstechnischen Alternative kann an dieser Stelle auch ein Vernetzungssystem, hier umfassend das Phenolharz und das Zinndichorid, zudosiert werden. In der zweiten Hälfte des Extruders erfolgt die dynamische Vulkanisation der Kautschukphase, das Entgasen der Schmelze und der Druckaufbau zum Ausformen. Der Massestrang wird in einem Wasserbecken abgekühlt und anschließend granuliert.

Das Granulat wurde 3 h bei 80°C getrocknet und anschließend auf einer Spritzgießmaschine zu Prüfkörpern verarbeitet.

In der Tabelle 1 sind beispielhaft einige Mischungsrezepturen zusammengestellt. In der Tabelle 2 sind ferner einige Materialdaten der Referenzmischungen und der erfindungsgemäßen Mischungen dargestellt. Für die gemessenen Shore Härten ist zu beachten, daß die an einem spritzgegossenen Prüfkörper ermittelten Härten erfahrungsgemäß 3 bis 5 Punkte über den an extrudierten Flachprofilen gemessenen Werten liegen. Die Mischung I stellt die Ausgangsbasis der Untersuchungen dar. Die mit 100 Teilen paraffinischen Weichmacheröl verstreckte Mischung ohne VLDPE weist eine Härte von 70 Sh A auf. Die Referenzmischungen II und III wurden durch weitere Zugabe des paraffinischen Öles weicher eingestellt. Aufgrund des hohen Ölanteiles mußten diese Mischungen mit einem Zweistufenprozeß hergestellt werden. Die Härte der mit 125 Teilen Öl verstreckten Referenzmischung II beträgt 65 Sh A bzw. 62 Sh A bei der Referenzmischung III mit 150 Teilen Öl. Die erfindungsgemäßen Mischungen IV und V wurden mit 100 Teilen Öl verstreckt. Bei den erfindungsgemäßen Mischung IV und V wurde im Vergleich zu den Mischungen I bis III ein Teil des Polypropylens durch VLDPE ersetzt. Gegenüber Mischung I sind die Mischungen IV und V bei gleichem Ölanteil 10 bzw. 13 Sh A weicher. Die Festigkeit der erfindungsgemäßen Mischung V ist mit dem Wert der härteren Mischung II vergleichbar. Bei Mischung IV wurde der Anteil der thermoplastischen Phase von 50 auf 60 Teile erhöht. Hierdurch konnte die Prozeßsicherheit bei der Herstellung des thermoplastischen Vulkanisates erhöht werden, ohne die Härte der Mischung wesentlich ansteigen zu lassen. Die Härte dieser erfindungsgemäßen Mischung IV liegt 10 Shore unter der Mischung I. Die Zug- und Druckverformungswerte der erfindungsgemäßen Mischungen IV und V sind vergleichbar oder besser als bei den Referenzmischungen I bis III.

Das erfindungsgemäße thermoplastische Vulkanisat weist eine angenehme gummiähnliche Haptik auf. Die Festigkeiten liegen über dem Niveau gleichharter ausschließlich mit Öl gestreckter thermoplastischer Vulkanisate. Durch die teilweise Substitution des Weichmachers (D) durch unvernetztes Polyethylen (B) bei gleichzeitiger Reduzierung des Polypropylensanteils (A) ist es möglich, auch weiche thermoplastische Vulkanisate kostengünstig im Einstufenprozeß auf einem Schnecken- oder Walzensystem herzustellen. Besonders durch den Einsatz eines unverstreckten rieselfähigen EPDM's, insbesondere wiederum in Verbindung mit einem aromatenfreien Weichmacheröl, lassen sich kostengünstige, weiche, helle, bewitterungsstabile thermoplastische Vulkanisate herstellen.

Die durchgeführten Untersuchungen haben zudem gezeigt, daß das neuartige thermoplastische Vulkanisat auch erhebliche Vorteile bei der Prozeßsicherheit im Compoundierverfahren bietet.

Die Morphologieumwandlung von der Phase-Phase-Morphologie (unvernetzer Kautschuk - thermoplastischer Kunststoff) in die Teilchen-Matrix-Morphologie (vulkanisierter Kautschuk - thermoplastischer Kunststoff) während der dynamischen Vulkanisation wird durch das Viskositätsverhältnis und das Massenverhältnis der Kautschukphase zur Thermoplastphase bestimmt. Besonders bei den weichen thermoplastischen Vulkanisaten wird die Morphologieumwandlung während der dynamischen Vulkanisation durch den geringen Thermoplastanteil zunehmend schwieriger. Durch die Zugabe von Poylethylen (B) bei gleichzeitiger Reduzierung des Polypropylen-Anteils (A) läßt sich ein weicheres thermoplastisches Vulkanisat bei gleichbleibend hoher Prozeßsicherheit herstellen. Da das Polyethylen (B) im wesentlichen unvernetzt vorliegt, weist das erfindungsgemäße thermoplastische Vulkanisat eine gute Fließfähigkeit auf.

**Tabelle 1**

| | Rezeptur-Nr | I | II | III | IV | | V | |
|---|---|---|---|---|---|---|---|---|
| | | pbw | pbw | pbw | pbw | % | pbw | % |
| A | Polypropylen | 50 | 50 | 50 | 35 | 13,46 | 30 | 12 |
| B | VLDPE | - | - | - | 25 | 9,62 | 20 | 8 |
| C | EPDM-Kautschuk | 100 | 100 | 100 | 100 | 38,46 | 100 | 40 |
| D | Weichmacher | 100 | 125 | 150 | 100 | 38,46 | 100 | 40 |
| E | Füllstoff u. Additive | 36 | 36 | 36 | 36 | | 36 | |
| | Zinndichlorid | 1 | 1 | 1 | 1 | | 1 | |
| | Phenolharz | 6 | 6 | 6 | 6 | | 6 | |
| | Summe | 293 | 318 | 343 | 303 | | 293 | |

| | | | | | | | | |
|---|---|---|---|---|---|---|---|---|
| pbw = parts by weight % = Gewichtsprozent Eingesetzte Rohstoffe: EPDM-Kautschuke: Royalene IM 7100 / Buna EPG 6470C Polypropylen: Eltex P HF 100 Moplen Q 30 P VLDPE: Clearflex MQFO / Clearflex MPDO Weichmacher: Tudalen 9246 / Enerpar M 1930 Füllstoff: Barytmehl N 903 /-Polestar 200 R Additive: Irganox 1010 Irganox 1135 Tinuvin 770 Chemasorb 944 Phenolharz: SP 1045 | | | | | | | | |

**Tabelle 2**

| Kennwerte der Mischungen I - V | | | | | | |
|---|---|---|---|---|---|---|
| Rezeptur-Nr: | | I | II | III | IV | V |
| Härte Shore A | [Skt] | 70 | 65 | 62 | 60 | 57 |
| Reißfestigkeit | [N/mm²] | 4,3 | 3,3 | 2,8 | 3,4 | 3,2 |
| Reißdehnung | [%] | 233 | 229 | 209 | 180 | 196 |
| DVR(25%/22h/RT) | [%] | 21 | 22 | 21 | 19 | 16 |
| DVR (25%/22h/70°C) | [%] | 33 | 34 | 35 | 37 | 31 |
| DVR (25%/22h/100°C) | [%] | 44 | 41 | 44 | 40 | 33 |
| ZVR (25%/22h/RT) | [%] | - | 23 | 22 | 22 | 18 |

## Patentansprüche

1. Verfahren zum Herstellen eines thermoplastischen Vulkanisats, umfassend:
(a) Einspeisen von unvulkanisiertem Kautschuk und üblichen Mischungsingredienzien ohne Vernetzer oder Vernetzungssystem in einen Extruder;
(b) Aufschmelzen des unvulkanisierten Kautschuks und Dispergieren der üblichen Mischungsingredienzien in dem aufgeschmolzenen unvulkanisierten Kautschuk;
(c) Zugabe eines Weichmachers zu dem aufgeschmolzenen unvulkanisierten Kautschuk im ersten Drittel des Extruders;
(d) Zugabe eines thermoplastischen Kunststoffs und einen unvernetzten Polyethylen zu dem aufgeschmolzenen unvulkanisierten Kautschuk; und
(e) Zugabe des Vernetzers bzw. des Vernetzungssystems zur dynamischen Vulkanisation des unvulkanisierten Kautschuks.

2. Verfahren nach Anspruch 1, wobei der thermoplastische Kunststoff aus Polystyrol, Polyamid, Polyester, Polypropylen oder Mischungen davon ausgewählt ist.

3. Verfahren nach einem der Ansprüche 1 bis 2, wobei der unvulkanisierte Kautschuk aus Naturkautschuk, Butylkautschuk, Styrol-Butadien-Kautschuk, Nitrilkautschuk, Ethylen-Propylen-Dien-Mischpolymerisat-Kautschuk oder Mischungen davon ausgewählt ist.

4. Verfahren nach einem der Ansprüche 1 bis 3, wobei der Weichmacher ein Weichmacheröl, insbesondere ein paraffinisches Öl oder ein naphthalisches Öl ist.

5. Verfahren nach einem der Ansprüche 1 bis 4, wobei das Vernetzungsmittel bzw. das Vernetzungssystem ein Phenolharz umfasst.

6. Verfahren nach Anspruch 5, wobei das Vernetzungsmittel bzw. das Vernetzungssystem Zinndichlorid umfasst.

7. Verfahren nach einem der Ansprüche 1 bis 5, wobei die üblichen Mischungsingredienzien aus Alterungsschutzmitteln, UV-Absorbern, Pigmenten, Flammschutzmitteln, Fließmitteln, Prozesshilfsmitteln und Mischungen davon ausgewählt sind.

8. Verfahren nach einem der Ansprüche 1 bis 7,wobei der Extruder ein Schneckenextruder ist.

9. Verfahren nach Anspruch 8, wobei der Schneckenextruder ein Doppelschneckenextruder ist.

10. Verfahren nach einem der Ansprüche 1 bis 7, wobei der Extruder ein Walzenextruder ist.

11. Verfahren nach einem der Ansprüche 1 bis 10, wobei die Zugabe des thermoplastischen Kunststoffs in Schritt (d) nach dem ersten Drittel des Extruders erfolgt.

## Claims

1. Process for the preparation of a thermoplastic vulcanisate, comprising:
(a) feeding non-vulcanised rubber and conventional mixture ingredients without a cross-linking agent or a cross-linking system into an extruder;
(b) melting the non-vulcanised rubber and dispersing the conventional mixture ingredients in the molten non-vulcanised rubber;
(c) adding a plasticiser to the molten non-vulcanised rubber in the first third of the extruder;
(d) adding a thermoplastic material and a non-crosslinked polyethylene to the molten non-vulcanised rubber; and
(e) adding the cross-linking agent or the cross-linking system for the dynamic vulcanisation of the non-vulcanised rubber.

2. Process according to claim 1, wherein the thermoplastic material is selected from polystyrene, polyamide, polyester, polypropylene or mixtures thereof.

3. Process according to either claim 1 or claim 2, wherein the non-vulcanised rubber is selected from natural rubber, butyl rubber, styrene-butadiene rubber, nitrile rubber, ethylene-propylene-diene copolymer rubber or mixtures thereof.

4. Process according to any one of claims 1 to 3, wherein the plasticiser is a plasticiser oil, especially a paraffin oil or a naphthalene oil.

5. Process according to any one of claims 1 to 4, wherein the cross-linking agent or the cross-linking system comprises a phenol resin.

6. Process according to claim 5, wherein the cross-linking agent or the cross-linking system comprises stannic dichloride.

7. Process according to any one of claims 1 to 5, wherein the conventional mixture ingredients are selected from anti-ageing agents, UV-absorbers, pigments, flameproofing agents, flow agents, process auxiliaries and mixtures thereof.

8. Process according to any one of claims 1 to 7, wherein the extruder is a screw extruder.

9. Process according to claim 8, wherein the screw extruder is a twin screw extruder.

10. Process according to any one of claims 1 to 7, wherein the extruder is a roller extruder.

11. Process according to any one of claims 1 to 10, wherein the addition of the thermoplastic material in step (d) takes place after the first third of the extruder.

## Revendications

1. Procédé de fabrication d'un produit vulcanisé thermoplastique, comprenant :
(a) le chargement d'un caoutchouc non vulcanisé et des ingrédients de mélange usuels sans réticulant ou système réticulant dans une extrudeuse ;
(b) la fusion du caoutchouc non vulcanisé et la dispersion des ingrédients de mélange usuels dans le caoutchouc non vulcanisé fondu ;
(c) l'addition d'un plastifiant au caoutchouc non vulcanisé fondu dans le premier tiers de l'extrudeuse ;
(d) l'addition d'une matière plastique thermoplastique et d'un polyéthylène non réticulé au caoutchouc non vulcanisé fondu ; et
(e) l'addition du réticulant ou du système réticulant pour la vulcanisation dynamique du caoutchouc non vulcanisé.

2. Procédé selon la revendication 1, dans lequel la matière plastique thermoplastique est choisie parmi le polystyrène, le polyamide, le polyester, le polypropylène ou leurs mélanges.

3. Procédé selon l'une des revendications 1 à 2, dans lequel le caoutchouc non vulcanisé est choisi parmi le caoutchouc naturel, le caoutchouc de butyle, le caoutchouc de styrène - butadiène, le caoutchouc de nitrile, le caoutchouc de polymère mixte d'éthylène - propylène - diène ou leurs mélanges.

4. Procédé selon l'une des revendications 1 à 3, dans lequel le plastifiant est une huile plastifiante, notamment une huile paraffinique ou une huile naphtalique.

5. Procédé selon l'une des revendications 1 à 4, dans lequel l'agent réticulant ou le système réticulant comprend une résine phénolique.

6. Procédé selon la revendication 5, dans lequel l'agent réticulant ou le système réticulant comprend du dichlorure d'étain.

7. Procédé selon l'une des revendications 1 à 5, dans lequel les ingrédients de mélange usuels sont choisis parmi les agents de protection contre le vieillissement, les absorbeurs d'UV, les pigments, les agents ignifuges, les agents fluidifiants, les auxiliaires de transformation et leurs mélanges.

8. Procédé selon l'une des revendications 1 à 7, dans lequel l'extrudeuse est une extrudeuse à vis.

9. Procédé selon la revendication 8, dans lequel l'extrudeuse à vis est une extrudeuse bi-vis.

10. Procédé selon l'une des revendications 1 à 7, dans lequel l'extrudeuse est une extrudeuse à cylindre.

11. Procédé selon l'une des revendications 1 à 10, dans lequel l'addition de la matière plastique thermoplastique à l'étape (d) s'effectue après le premier tiers de l'extrudeuse.
